(19) **Europäisches Patentamt**

**European Patent Office**

**Office européen des brevets**

(11) **EP 1 123 484 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.⁷: $G01C\ 19/56$

(86) Internationale Anmeldenummer:
**PCT/DE2000/002829**

(21) Anmeldenummer: **00969190.8**

(22) Anmeldetag: **19.08.2000**

(87) Internationale Veröffentlichungsnummer:
**WO 2001/014831 (01.03.2001 Gazette 2001/09)**

(54) **Vorrichtung zur Erzeugung eines Drehratensignals**

Device for generating a rotation rate signal

Dispositif pour générer un signal de vitesse de rotation

(84) Benannte Vertragsstaaten:
**DE FR GB NL**

(30) Priorität: **24.08.1999 DE 19939998**

(43) Veröffentlichungstag der Anmeldung:
**16.08.2001 Patentblatt 2001/33**

(73) Patentinhaber: **ROBERT BOSCH GMBH**
**70442 Stuttgart (DE)**

(72) Erfinder:
• **FUNK, Karsten**
  **Palo Alto, CA 9430 (US)**
• **NEUL, Reinhard**
  **70567 Stuttgart (DE)**
• **LORENZ, Gunar**
  **70839 Gerlingen (DE)**

(56) Entgegenhaltungen:

| | |
|---|---|
| **EP-A- 0 298 651** | **WO-A-97/45699** |
| **US-A- 4 951 508** | **US-A- 5 481 914** |
| **US-A- 5 691 472** | **US-A- 5 796 002** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einer Vorrichtung zur Erzeugung eines Drehratensignals mit einem rotatorisch oder linear schwingenden Drehratensensor mit den im Oberbegriff des Anspruchs 1 angegebenen Merkmalen.

Drehratensensoren, die den Corioliseffekt ausnutzen, sind im Zusammenhang mit Systemen zur Fahrzeugdynamikregelung bei Kraftfahrzeugen bekannt und werden von der Anmelderin als mikromechanische Drehratensensoren am Markt angeboten. Ein Drehratensensor weist eine oder mehrere seismische Massen auf, die durch eine in einer elektronischen Schaltung erzeugte Spannung zu mechanischen Schwingungen angeregt werden. Diese wirken auf einen oder mehrere Beschleunigungssensoren, die bei einer Drehung des Systems die auf die schwingenden Massen wirkende Coriolis-Beschleunigung messen. Aus den Anregungs- und Beschleunigungssignalen kann mit Hilfe einer Auswerteschaltung die Drehrate des Systems bestimmt werden.

Ein zusätzliches elektrisches Testsignal, das auf den oder die Beschleunigungssensoren gegeben wird, kann dazu dienen, eine zusätzliche, willkürlich erzeugte Beschleunigung auf den Sensor wirken zu lassen. Damit können beispielsweise Informationen über die Eigenschaften des Beschleunigungssensors und der nachgeschalteten Auswerteschaltung gewonnen werden. Es ist somit auch möglich, Fehler, insbesondere systematische Fehler, zu erkennen. Dies ist besonders wichtig, da den Corioliseffekt auswertende Drehratensensoren systematische Fehler aufweisen, deren Auswirkungen auf das Meßsignal durch geeignete Wahl der Auswertemethoden minimiert werden müssen.

In der DE 199 10 415 sind ein Verfahren und eine Vorrichtung zum Abstimmen eines ersten Oszillators mit einem zweiten Oszillator beschrieben. Dabei werden zwei symmetrisch zu der Schwingung des zweiten Oszillators frequenz- und phasenverschobene Signale dazu verwendet, das Antwortverhalten des ersten Oszillators zu bestimmen. In Abhängigkeit der Differenz der Antwortverhalten wird eine Abstimmung des ersten Oszillators mit Bezug auf den zweiten Oszillator durchgeführt. Zur Amplitudenkorrektur erfolgt eine Quotientenbildung aus dem Ausgangssignal und der Summe der Antwortverhalten. Dieses Verfahren und die Vorrichtung können insbesondere in einem Drehratensensor zum Einsatz kommen. Sie stellen sicher, daß die Auswertebedingungen für die Corioliskraft stabil sind. Auch Temperaturveränderungen und Alterungseffekte können automatisch nachgeregelt werden, wobei mittels des Regelkreises die Schwingungen beider Oszillatoren aufeinander abgestimmt werden. Das bekannte Verfahren macht es nicht mehr nötig, den Detektionsmodus möglichst weit von der Oszillatorfrequenz zu entfernen.

Aus der DE-A-196 53 021 ist eine Vorrichtung zur Ermittlung einer Drehrate mit einem Drehratensensor bekannt, die unter anderem ein Maß für die Coriolis-Beschleunigung und damit auch für die Drehrate ist. Die Ausgangssignale des Drehratensensors sind pulsweitenmodulierte oder Sigma-Delta-Signale. Diese werden einer digitalen Auswerteschaltung zugeführt, welche einen Subtrahierer, einen Multiplizierer und einen Phasenschieber aufweist. Letzterem wird das Trägersignal zugeführt, das den Drehratensensor zu Schwingungen anregt, wobei der digitale Phasenschieber das Trägersignal in Phase mit den Coriolis-Beschleunigungsanteilen bringt und wobei das zugehörige Signal dem Multiplizierer zugeführt wird. Dessen Ausgangssignal wird über einen D/A-Wandler und einen Tiefpaß dem Ausgang zugeführt, an welchem das gewünschte Drehratensignal zur Verfügung steht.

Aus der Schrift US 5,481,914 ist eine Elektronikschaltung zur Benutzung in Coriolissensoren und anderen Sensoren bekannt, durch welche der Fehler im Sensorausgangssignal reduziert wird. Durch eine Frequenzübersetzung in der Anregungsrückkopplung des Sensorsystems werden die Komponenten des Sensoransteuerungssignals in einem vorbestimmten Frequenzbereich unterdrückt.

Aus der US 4,951,508 ist ein auf Vibrationsbewegungen beruhender Rotationssensor bekannt, welcher einen halbkugelförmigen Resonator, eine ringförmige Elektrode, welche den Resonator einspannt und dessen Schwingungen mit einer bestimmten Amplitude verhindert sowie 16 Einzelelektroden zur Unterdrückung von aus Quadraturfehlern herrührenden Schwingungen umfasst. Zwei unabhängige Schwingungskomponenten des Schwingungsmusters werden durch weitere Elektroden aufgegriffen.

Die EP 0 298 651 A2 offenbart einen Drehratensensor, welcher ein Paar von angetriebenen Zähnen umfasst, welche in eine Schwingungsbewegung versetzt werden. Weiter umfasst der Sensor ein zweites Paar von Zähnen, welche mechanisch an die angetriebenen Zähne angekoppelt sind. Aus der über die Ankopplung an das zweite Zähnepaar übertragenen Schwingungsbewegung lässt sich die Drehrate ermitteln.

Aus der US 5,796,002 ist ein auf einer piezoelektrischen Struktur beruhender Drehratesensor bekannt. Zur Ermittlung der Drehrate werden die reflektierten Signale zweier an der piezoelektrischen Struktur reflektierter Laserstrahlen ausgewertet.

Die Merkmal der Oberbegriffe der unabhängigen Ansprüche sind der US 5,481,914 entnommen.

Vorteile der Erfindung

Die erfindungsgemäße Vorrichtung zur Erzeugung eines Drehratensignals mit einem rotatorisch oder linear schwingenden Drehratensensor führt zu dem Vorteil, daß ein Auftreten eines Quadratursignals, welches die Drehratensignalermittlung negativ beeinflussen könnte, durch eine Erzeugung geeigneter Vorspannungssignale für die Elektrodenanordnung vermieden oder zumindest minimiert wird. Aufgrund dieser Vorspannungssignale treten auf den Drehratensensor, der beispielsweise scheibenförmig aufgebaut ist, einwirkende elektrostatische Kräfte auf. Mittels dieser wird der Drehratensensor so geneigt, daß das Quadratursignal minimiert ist. Um den Drehratensensor in eine gewünschte Richtung zu neigen, genügt es, Potentialdifferenzen zwischen den Detektionselektroden vorzugeben. Dies kann durch eine Vorgabe zweier Ausgangssignale $U_{Q1}$ und $U_{Q2}$ aus dem Quadraturkompensator erfolgen, wobei diese Ausgangssignale die auf.die Elektroden gegebenen Vorspannungen beeinflussen. Vorzugsweise werden zur Kompensation des Quadratursignals beim rotatorischen Drehratensensor vier und beim linearen Drehratensensor mindestens 2 unter der Sensorstruktur angeordnete Elektroden mit geeigneten Vorspannungen beaufschlagt.

Dazu ist der Quadraturkompensator ausgangsseitig mit der Vorspannungserzeugungsanordnung und eingangsseitig mit einer Auswerteschaltung verbunden. Die Auswerteschaltung enthält einen adaptiven Phasenkompensator und einen Synchrondemodulator, wobei der Phasenkompensator Ausgänge für ein phasenverschobenes Meßsignal und für Demodulationsträgersignale besitzt.

Weitere Vorteile der erfindungsgemäßen Vorrichtung bestehen in einer Verbesserung der Meßauflösung und - da die Quadraturkomponente in adaptiver Weise unterdrückt wird - darin, daß Alterungs- und Temperaturabhängigkeiten sowie die Notwendigkeit eines Abgleichs vermieden werden.

Weitere Vorteile der Erfindung ergeben sich aus in den abhängigen Ansprüchen angegebenen Merkmalen.

Zeichnung

Die Erfindung wird anhand eines in den Zeichnungen dargestellten Ausführungsbeispiels in der nachfolgenden Beschreibung näher erläutert. Es zeigt:

Figur 1   eine Skizze zur Erläuterung des Prinzips eines rotatorisch schwingenden Drehratensensors,

Figur 2   eine Skizze zur Veranschaulichung der Elektrodenstruktur unter der seismischen Masse,

Figur 3   ein Blockschaltbild einer Vorrichtung zur Vorspannungserzeugung für einen rotatorisch schwingenden Drehratensensor und

Figur 4   ein Diagramm zur Veranschaulichung des Amplitudenfrequenzganges der Detektionsbewegung.

Beschreibung

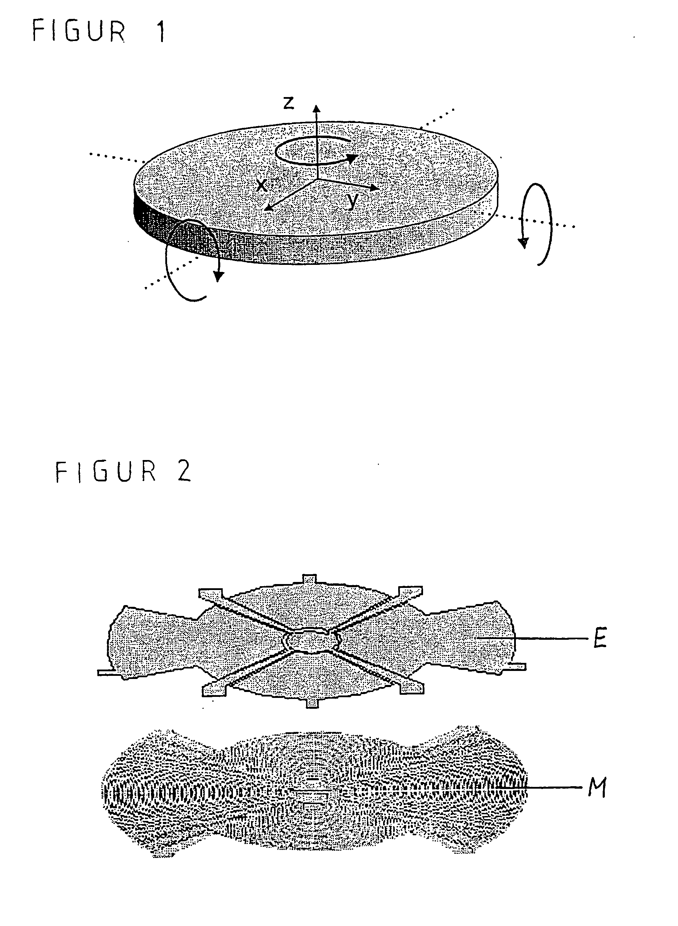

Die Figur 1 zeigt eine Skizze zur Erläuterung des Prinzips eines rotatorisch schwingenden Drehratensensors. Eine scheibenförmige Struktur wird in eine rotatorisch vibrierende Schwingung um die zur Chipoberfläche senkrechte Achse z versetzt. Aufgrund des Drehimpulserhaltungssatzes reagiert diese Struktur auf eine von außen aufgebrachte Drehgeschwindigkeit (Drehrate) um die Achse y mit einem Drehmoment, das die scheibenförmige Struktur um eine Achse x senkrecht zur Antriebbewegungsachse z und senkrecht zur Drehratenachse y verkippt. Diese Detektionsbewegung um die Achse x wird mit Hilfe von Elektroden, die sich unterhalb der Struktur auf dem Substrat befinden, elektrostatisch über Kapazitätsänderungen detektiert. Diese Anordnung geht aus der Figur 2 hervor, welche eine Skizze zur Veranschaulichung der Elektrodenstruktur E unter der seismischen Masse M des Sensors zeigt.

Das erhaltene Meßsignal wird einem Kapazitäts-Spannungs-Wandler zugeführt, an dem ein Signal auftritt, das der Drehgeschwindigkeit der Antriebsbewegung multipliziert mit der zu messenden Drehrate entspricht. Nachrichtentechnisch betrachtet handelt es sich um ein zweiseitenbandamplitudenmoduliertes Signal ohne Träger. Mittels einer nachfolgenden Signalverarbeitung erhält man durch eine Synchrondemodulation und eine Tiefpaßfilterung das gewünschte Drehratensignal.

Bei realen Drehratensensoren tritt an den Detektionskapazitäten jedoch nicht nur das genannte drehratenproportionale Signal auf, das einer Anregung der Detektionsbewegung in Phase mit der Drehgeschwindigkeit der Antriebsbewegung entspricht, sondern auch ein Signal, das die Detektionsbewegung in Phase mit der Amplitude bzw. der Beschleunigung der Antriebsbewegung anregt. Es handelt sich dabei um ein Störsignal, das unabhängig von der zu messenden Drehrate vorhanden ist und das geeignet ist, die Drehratensignalauswertung negativ zu beeinflussen. So verschlechtert es beispielsweise die erreichbare Meßauflösung. Dieses Störsignal ist zum Meßsignal um 90° phasenverschoben. Es steht also im elektrischen Zeigerdiagramm senkrecht auf dem Meßsignal und wird daher als Quadratursignal bezeichnet.

Die Gründe für das Auftreten eines Quadratursignals sind im wesentlichen Imperfektionen, die bei der Fertigung des mikromechanischen Sensorelements auftreten.

Gemäß der vorliegenden Erfindung wird das genannte Quadratursignal bereits in der Sensormechanik kompensiert. Dazu werden unter Verwendung eines digitalen adaptiven Algorithmus in geeigneter Weise elektrostatische Kräfte auf die scheibenförmige Sensorstruktur ausgeübt, so daß ein Quadratursignal erst gar nicht auftritt bzw. es zumindest minimiert wird. Dadurch werden in vorteilhafter Weise auch die angesprochenen unerwünschten Einflüsse des Quadratursignals auf die Signalauswertung vermieden.

Mittels dieser Signalauswertung wird das amplitudenmodulierte, drehratenproportionale Signal, das aus dem Kapazitäts-Spannungs-Wandler kommt, aus diversen Störsignalen herausgefiltert. Störsignale können beispielsweise Rauschen der Mechanik und der Elektronik sein, können aber auch durch Störbeschleunigungen verursacht werden. Aus diesen Gründen und aus Gründen der Empfindlichkeitssteigerung ist es vorteilhaft, bei der Detektionsbewegung die Resonanz der mechanischen Struktur um die Detektionsachse auszunutzen.

Bei mechanischen Strukturen wie dem DRS-MM2 der Anmelderin liegen aber die Antriebsresonanz und die Detektionsresonanz nicht notwendigerweise aufeinander und streuen außerdem mit den Fertigungstoleranzen. Daher benötigt man eine Detektionsresonanzregelung, die die Detektionsresonanzfrequenz auf die Antriebsresonanzfrequenz zwingt. Ein derartiger Resonanzregler ist in der bereits oben erwähnten DE 199 10 415 beschrieben.

Ein Problem, das dabei auftritt, ist die Bandbreite der Resonanzüberhöhung der Detektionsbewegung. Bei Strukturen wie dem DRS-MM2 beträgt diese Bandbreite aufgrund der entsprechenden Güte der Detektionsresonanz nur einige Hz. Damit würde sich eine Bandbreite der gesamten Drehratenmessung von ebenfalls einigen Hz ergeben. Das wäre viel zu wenig, verglichen mit den 50 bis 100 Hz, die in den Spezifikationen üblicherweise gefordert werden. Man könnte zwar den Gasdruck erhöhen, der die Struktur umgibt und damit die Resonanz soweit dämpfen, bis die Resonanzüberhöhung eine passende Bandbreite besitzt. Man würde damit aber gleichzeitig das mechanische Rauschen vergrößern und die Antriebsresonanz bedämpfen, so daß man eine geringere Meßauflösung und höhere erforderliche Antiebsspannungen hätte. Gleichzeitig würde man die Temperaturabhängigkeit der Meßempfindlichkeit vergrößern. Alle diese Auswirkungen sind höchst unerwünscht.

Den gleichen Effekt einer passenden Bedämpfung der Detektionsresonanz kann man aber auch mittels einer elektronischen Bandbreiteneinstellung erzielen. Gleichzeitig ergeben sich dadurch auch Vorteile bezüglich der Temperaturabhängigkeit der Resonanzüberhöhung der Detektionsbewegung und damit der Sensorempfindlichkeit.

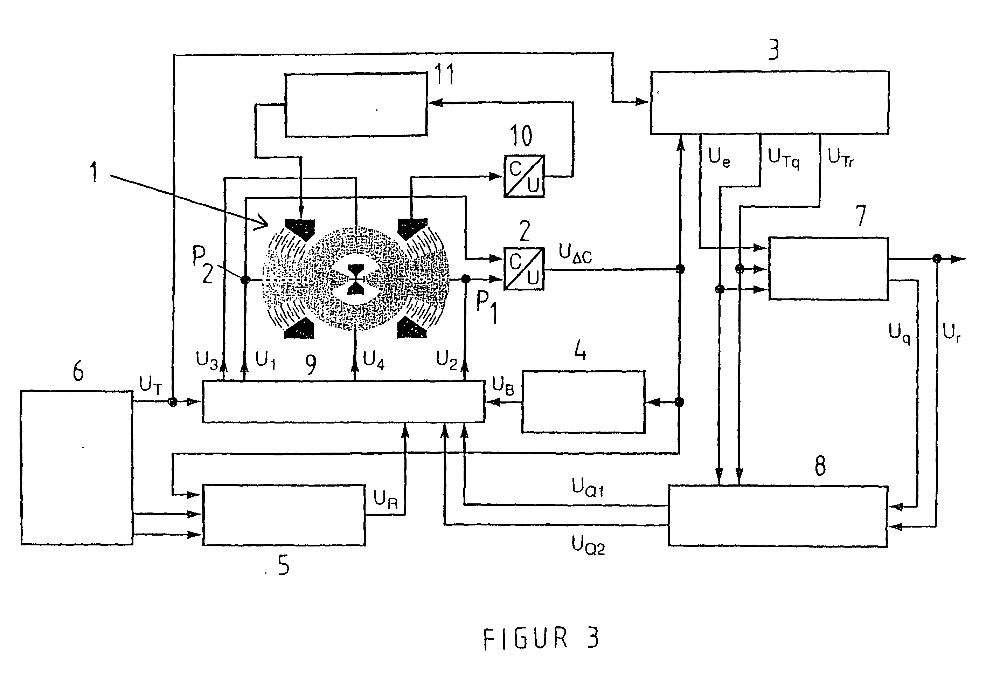

Die Figur 3 zeigt ein Blockschaltbild einer Vorrichtung zur Vorspannungserzeugung für einen rotatorisch schwingenden Drehratensensor, die sinngemäß auch bei einem linear schwingenden Drehratensensor anwendbar ist.

Die vom Drehratensensor 1 erzeugten, an den Schaltungspunkten $P_1$ und $P_2$ anliegenden Meßsignale, welche vorzugsweise Kapazitätsmeßsignale sind, werden einem Kapazitäts-Spannungs-Wandler 2 zugeführt.

Dieser stellt an seinem Ausgang ein Signal $U_{\Delta C}$ zur Verfügung, welches der Drehgeschwindigkeit der Antriebsbewegung multipliziert mit der zu messenden Drehrate entspricht.

Dieses wird einem adaptiven Phasenkompensator 3, einer Bandbreiteneinstellungsschaltung 4 und einem Resonanzregler 5 zugeführt.

Der adaptive Phasenkompensator 3 hat die Aufgabe, das in einem Testsignalgenerator 6 erzeugte Signal $U_T$, das den Drehratensensor zu Schwingungen anregt, in Phase mit den im Ausgangssignal des Kapazitäts-Spannungs-Wandlers 2 enthaltenen Coriolis-Beschleunigungsanteilen zu bringen. Dies kann beispielsweise so geschehen, wie es in der bereits oben genannten Patentanmeldung 196 53 021 der Anmelderin beschrieben ist. Das Ausgangssignal $U_e$ des Phasenkompensators 3, welches nach dem LMS (least-mean-square)-Algorithmus ermittelt wird, wird dem Synchrondemodulator 7 zugeführt. Dieser erhält weiterhin Demodulationsträgersignale $U_{Tq}$ und $U_{Tr}$, welche ebenfalls im adaptiven Phasenkompensator durch Auswertung des Signals $U_T$ des Testsignalgenerators 6 und des Ausgangssignals $U_{\Delta C}$ des Kapazitäts-Spannungs-Wandlers 2 erhalten werden.

Im Synchrondemodulator 7 erfolgt durch Multiplikation und anschließende Tiefpaßfilterung aus dem Signal $U_e$ und den Demodulationsträgern $U_{Tq}$ und $U_{Tr}$ eine Ermittlung des gewünschten Drehratensignals $U_r$ und eines Quadratursignals $U_q$.

Aus dem Drehratensignal $U_r$ und dem Quadratursignal $U_q$ werden mittels des adaptiven Quadraturkompensators 8, welchem weiterhin die im adaptiven Phasenkompensator 3 ermittelten Demodulationsträgersignale $U_{Tq}$ und $U_{Tr}$ zugeführt werden, Steuersignale $U_{Q1}$ und $U_{Q2}$ ermittelt, die der Vorspannungserzeugungsanordnung 9 zugeleitet werden. Diese Steuersignale $U_{Q1}$ und $U_{Q2}$ werden im Sinne eines digitalen adaptiven Algorithmus zum Beaufschlagen der Detekionselektroden des Drehratensensors mit Gleichspannungspegeln verwendet. Diese werden durch den adaptiven Algorithmus solange verändert, bis das entstehende Quadratursignal $U_q$ minimal wird bzw. völlig verschwindet. Hierzu können verschiedene Algorithmen eingesetzt werden, beispielsweise der Optimierungsalgorithmus nach der Methode des steilsten Abstiegs.

Bei dieser Methode werden kleine Spannungsänderungen abwechselnd über $U_{Q1}$ und $U_{Q2}$ auf die Elektroden gegeben und die Reaktion des Quadratursignals darauf ausgewertet. Sinkt die Quadratur, so werden weiter gleichartige Spannungsänderungen auf die Ausgangssignale gegeben. Steigt die Quadratur, werden Spannungsänderungen entgegengesetzter Polarität verwendet. Gleichzeitig wird die Größe der Spannungsänderung gemäß dem Betrag der verbleibenden Quadratur angepaßt. Auf diese Art gelangt man zu einem Minimum der Quadratur, im Idealfall verschwindet sie ganz.

Der Vorspannungserzeugungsanordnung 9 werden außer den bereits genannten Steuerspannungen $U_{Q1}$ und $U_{Q2}$ weitere Eingangssignale $U_T$, $U_R$ und $U_B$ zugeführt.

Das Signal $U_T$ wird im Testsignalgenerator 6 generiert. Dieser verwendet beispielsweise eine Frequenz $f_t$, die 100 Hz beträgt, und erzeugt daraus ein Testsignal $U_T$ mit Frequenzkomponenten bei $f_s + f_t$ und $f_s - f_t$, wobei $f_s$ die Eigenfrequenz eines Schwingkörpers beschreibt. Dieses Testsignal gelangt über die Vorspannungserzeugungsanordnung 9 an den Drehratensensor 1 und auch direkt - wie bereits oben ausgeführt wurde - an den adaptiven Phasenkompensator 3. Weiterhin wird das Signal $U_T$ auch in Form seiner Einzelkomponenten dem Resonanzregler 5 zugeführt.

Der Resonanzregler 5 ermittelt unter Verwendung dieser Einzelkomponenten des Signals $U_T$ und des Ausgangssignals $U_{\Delta C}$ des Kapazitäts-Spannungs-Wandlers 2 eine Steuerspannung $U_R$, die am Ausgang des Resonanzreglers 5 zur Verfügung gestellt und der Vorspannungserzeugungsanordnung 9 zugeführt wird.

Ein Beispiel für einen derartigen Resonanzregler ist der bereits oben genannten DE 199 10 415 der Anmelderin entnehmbar. Die ermittelte Steuerspannung $U_R$ wird allen vier Elektroden als gemeinsame Vorspannung zugeführt. Dadurch wird die effektive Federsteifigkeit der Detektionsbewegung des Sensorelementes so weit verringert, bis die Arbeitsfrequenz des Sensorelementes und die Resonanzfrequenz der Detektionsbewegung übereinstimmen. Die Verwendung eines derartigen Resonanzreglers hat den Vorteil, daß es nicht mehr notwendig ist, den Detektionsmodus möglichst weit von der Oszillatorfrequenz entfernt vorzusehen. Ein durch die Resonanzüberhöhung verursachter Amplitudenfehler tritt nicht mehr auf, da der eingeschwungene Zustand durch permanente Resonanzregelung stabil beibehalten wird.

Das Signal $U_B$ wird in der Bandbreiteneinstellungsschaltung 4 erzeugt, welcher eingangsseitig das Ausgangssignal $U_{\Delta C}$ des Kapazitäts-Spannungs-Wandlers 2 zugeführt wird. Folglich wird zur elektronischen Bandbreiteneinstellung der Detektionsbewegung des Sensorelementes eine geeignete Gegenkopplung des Signals $U_{\Delta C}$ über den Ausgang der Bandbreiteneinstellung $U_B$ und die Vorspannungserzeugung auf das Sensorelement durchgeführt. Dazu wird eine Art Lageregler verwendet, der einen um 90° phasenverschobenen Anteil besitzt. Zu diesem Zweck kommen beispielsweise $DT_1$-, PDT1- und $PIDT_1$-Regler in Frage. Diese Regler werden aber nicht wie übliche Lageregler betrieben, weil diese die Übertragungsfunktion der Detektionsbewegung ungeeignet verändern würden. Vielmehr plaziert man im Gegensatz zum sonst üblichen Lageregler den Regler im Rückwärtszweig der Regelschleife und es wird nur eine ganz bestimmte, vergleichsweise kleine Kreisverstärkung eingestellt, die die Resonanzpole in der s-Ebene gerade soweit von der imaginären Achse entfernen, daß sich die gewünschte Bandbreite der Resonanz der Detektionsbewegung ergibt.

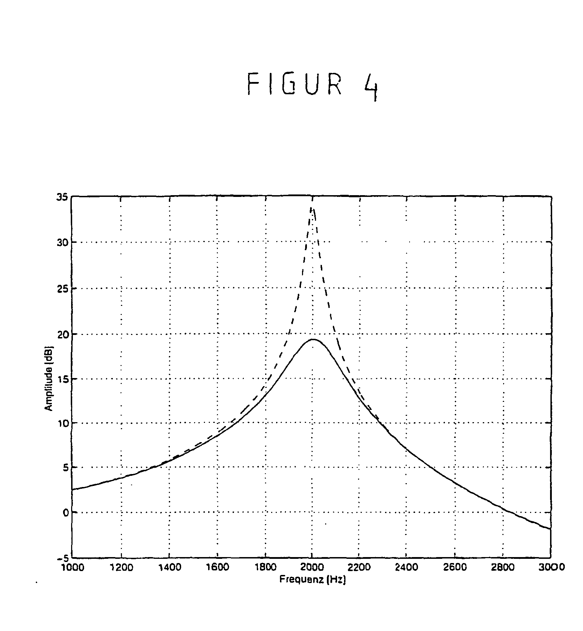

Die Figur 4 zeigt den Amplitudenfrequenzgang der Detektionsbewegung ohne (--) und mit (-) Bandbreiteneinstellung. Der Amplitudengang ist auf die Verstärkung bei der Frequenz 0 bezogen. Das Lehrsche Dämpfungsmaß der Detektionsbewegung ist zu D = 0,01 angenommen, die Arbeitsfrequenz ist beispielsweise 2 KHz. Es wurde ein $DT_1$-Regler eingesetzt. Um so größer die ursprüngliche Güte der Detektionsresonanz des Sensorelementes ist, desto unabhängiger wird die verbleibende Güte des Sensorelementes mit Bandbreiteneinstellung und damit die Bandbreite und die Meßempfindlichkeit des Gesamtsensors von Veränderungen der ursprünglichen Güte des Sensorelementes durch Temperatur, Alterung und Gasdruck.

Weitere Vorteile einer derartigen elektronischen Bandbreiteneinstellung bestehen darin, daß Schwankungen der Güte der Detektionsbewegung des Sensorelementes durch Fertigungstoleranzen, Alterung und Temperatur gedämpft werden. Ferner ist eine derartige elektronische Bandbreiteneinstellung einfacher realisierbar als eine mechanische Güteeinstellung, beispielsweise über den Gasdruck. Auch ist die Temperaturabhängigkeit der Meßempfindlichkeit des Gesamtsensors stark herabgesetzt.

Die Vorspannungserzeugungsschaltung 9 erzeugt unter Verwendung der ihr zugeführten Signale vier Vorspannungen $U_1$, $U_2$, $U_3$ und $U_4$ für die unterhalb der seismischen Masse des Drehratensensors angeordneten vier Elektroden. Dies geschieht nach den folgenden Beziehungen:

$$U_1 = U_B + U_{Q1} + U_T + U_R$$

$$U_2 = - U_B - U_{Q1} - U_T + U_R$$

$$U_3 = U_{Q2} + U_R$$

$$U_4 = - U_{Q2} + U_R.$$

Auch ein BITE-Signal kann an dieser Stelle eingespeist werden. Linear schwingende Drehratensensoren, die nur 2 Elektroden verwenden, benutzen nur die Spannungen $U_1$ und $U_2$.

Mittels der Amplitudenstabilisierungsschaltung 11, der über einen Kapazitäts-Spannungs-Wandler 10 ein vom Drehratensensor 1 abgeleitetes Eingangssignal zugeführt wird, wird ein Ausgangssignal erzeugt, aufgrund dessen der Sensor in eine Drehschwingung mit konstanter Amplitude um die aus der obigen Figur 1 ersichtliche z-Achse versetzt wird. Die Erzeugung dieses Ausgangssignals erfolgt mittels einer Schwingschaltung mit Amplitudenregelung. Dies führt dazu, daß das Sensorelement mit seiner Eigenfrequenz $f_s$ um die

z-Achse schwingt.

## Patentansprüche

1. Vorrichtung zur Erzeugung eines Drehratensignals, enthaltend

   - einen rotatorisch oder linear schwingenden Drehratensensor, welcher ausgangsseitig mindestens ein Meßsignal zur Verfügung stellt,
   - eine an den Drehratensensor angeschlossene Auswerteschaltung (2, 3, 7) zur Ermittlung eines Drehratensignals aus dem Meßsignal,
   - eine Vorspannungserzeugungsanordnung (9),
   - eine im Drehratensensor enthaltene Elektrodenanordnung mit mindestens zwei Elektroden, die mit der Vorspannungserzeugungsanordnung (9) verbunden sind,
   - einen adaptiven Quadraturkompensator (8), der eingangsseitig mit der Auswerteschaltung (2, 3, 7) und ausgangsseitig mit der Vorspannungserzeugungsanordnung (9) verbunden ist,
   - einen in der Auswerteschaltung enthaltenen adaptiven Phasenkompensator (3) und einen in der Auswerteschaltung enthaltenen Synchrondemodulator (7),

   **dadurch gekennzeichnet, dass**

   - der adaptive Phasenkompensator (3) Ausgänge für ein phasenverschobenes Meßsignal ($U_e$) und für Demodulationsträgersignale ($U_{Tq}$, $U_{Tr}$) aufweist.

2. Vorrichtung nach Anspruch 1, **dadurch gekennzeichnet, daß** das Meßsignal ein Kapazitätsmeßsignal ist und die Auswerteschaltung einen Kapazitäts-/Spannungs-Wandler (2) aufweist.

3. Vorrichtung nach Anspruch 1, **dadurch gekennzeichnet, daß** die Demodulationsträgersignale dem adaptiven Quadraturkompensator (8) zugeführt werden.

4. Vorrichtung nach Anspruch 3, **dadurch gekennzeichnet, daß** der Synchrondemodulator (7) Eingangsanschlüsse für die Ausgangssignale des adaptiven Phasenkompensators (3) sowie zwei Ausgänge aufweist, wobei am ersten dieser Ausgänge das Drehratensignal ($U_r$) und am zweiten dieser Ausgänge ein Quadratursignal ($U_q$) abgreifbar ist.

5. Vorrichtung nach Anspruch 4, **dadurch gekennzeichnet, daß** der adaptive Quadraturkompensator (8) einen Eingang für das Drehratensignal ($U_r$) und einen Eingang für das Quadratursignal ($U_q$) aufweist.

6. Vorrichtung nach Anspruch 5, **dadurch gekennzeichnet, daß** der adaptive Quadraturkompensator (8) aus seinen Eingangssignalen mittels eines digitalen, adaptiven Algorithmus mindestens zwei Steuersignale ($U_{Q1}$, $U_{Q2}$) für die Vorspannungserzeugungsanordnung (9) generiert.

7. Vorrichtung nach Anspruch 6, **dadurch gekennzeichnet, daß** der adaptive Quadraturkompensator (8) mindestens zwei Ausgänge aufweist, an denen er unterschiedliche Steuersignale ($U_{Q1}$, $U_{Q2}$) für die Vorspannungserzeugungsanordnung (9) zur Verfügung stellt.

8. Vorrichtung nach einem der vorhergehenden Ansprüche, **dadurch gekennzeichnet, daß** sie einen Resonanzregler (5) aufweist, der ausgangsseitig mit der Vorspannungserzeugungsanordnung (9) verbunden ist und zur Erzeugung eines Resonanzregelsignals ($U_R$) dient.

9. Vorrichtung nach einem der vorhergehenden Ansprüche, **dadurch gekennzeichnet, daß** das Ausgangssignal des Kapazitäts-Spannungs-Wandlers (2) einer Bandbreiteneinstellungsschaltung (4) zugeführt wird, die ausgangsseitig mit der Vorspannungserzeugungsanordnung (9) verbunden ist und zur Erzeugung eines Bandbreiteneinstellungs-Steuersignals ($U_B$) vorgesehen ist.

10. Vorrichtung nach Anspruch 9, **dadurch gekennzeichnet, daß** die Bandbreiteneinstellungsschaltung (4) einen Lageregler mit einem um 90° phasenverschobenen Anteil aufweist, der im Rückwärtszweig einer Regelschleife angeordnet ist.

11. Vorrichtung nach Anspruch 10, **dadurch gekennzeichnet, daß** die Kreisverstärkung des Lagereglers derart eingestellt ist, daß eine vorgegebene Bandbreite bzw. Güte der Resonanz der Detektionsbewegung erzielt wird.

12. Vorrichtung nach Anspruch 11, **dadurch gekennzeichnet, daß** die Elektrodenanordnung zwei bzw. vier Elektroden aufweist und die Vorspannungserzeugungsanordnung Vorspannungen für die Elektroden nach folgenden Beziehungen erzeugt:

$$U_1 = U_B + U_{Q1} + U_T + U_R$$

$$U_2 = - U_B - U_{Q1} - U_T + U_R$$

$$U_3 = U_{Q2} + U_R$$

$$U_4 = - U_{Q2} + U_R,$$

wobei im Fall von zwei Elektroden die Spannungen $U_1$ und $U_2$ verwendet werden und
wobei $U_T$ ein mittels eines Testgenerators (6) erzeugtes Testsignal, $U_R$ das Ausgangssignal des Resonanzreglers (5), $U_B$ das Ausgangssignal der Bandbreiteneinstellungsschaltung (4) und $U_{Q1}$ und $U_{Q2}$ die Ausgangssignale des adaptiven Quadraturkompensators (8) sind.


**Claims**

1.  Device for generating a rotational speed signal, containing

    -   a rotational speed sensor which oscillates in a rotational or linear fashion and which makes available at least one measurement signal at the output end,
    -   an evaluation circuit (2, 3, 7) which is connected to the rotational speed sensor and has the purpose of determining a rotational speed signal from the measurement signal,
    -   a bias voltage-generating arrangement (9),
    -   an electrode arrangement which is contained in the rotational speed sensor and has at least two electrodes which are connected to the bias voltage-generating arrangement (9),
    -   an adaptive quadrature compensator (8) which is connected at the input end to the evaluation circuit (2, 3, 7) and at the output end to the bias voltage-generating arrangement (9),
    -   an adaptive phase compensator (3) which is contained in the evaluation circuit, and a synchronous demodulator (7) which is contained in the evaluation circuit,

    **characterized in that**

    -   the adaptive phase compensator (3) has outputs for a phase-shifted measurement signal ($U_e$) and for demodulation carrier signals ($U_{Tq}$, $U_{Tr}$).

2.  Device according to Claim 1, **characterized in that** the measurement signal has a capacitance measuring signal, and the evaluation circuit has a capacitance/voltage connector (2).

3.  Device according to Claim 1, **characterized in that** the demodulation carrier signals are fed to the adaptive quadrature compensator (8).

4.  Device according to Claim 3, **characterized in that** the synchronous demodulator (7) has input terminals for the output signals of the adaptive phase compensator (3) and two outputs, wherein the rotational speed signal ($U_r$) can be tapped at the first of these outputs, and a quadrature signal ($U_q$) can be tapped at the second of these outputs.

5.  Device according to Claim 4, **characterized in that** the adaptive quadrature compensator (8) has an input for the rotational speed signal ($U_r$) and an output for the quadrature signal ($U_q$).

6.  Device according to Claim 5, **characterized in that** the adaptive quadrature compensator (8) generates at least two control signals ($U_{Q1}$, $U_{Q2}$) for the bias voltage-generating arrangement (9) from its input signals by means of a digital, adaptive algorithm.

7.  Device according to Claim 6, **characterized in that** the adaptive quadrature compensator (8) has at least two outputs at which it makes available different control signals ($U_{Q1}$, $U_{Q2}$) for the bias voltage-generating arrangement (9).

8.  Device according to one of the preceding claims, **characterized in that** it has a resonance regulator (5) which is connected at the output end to the bias voltage-generating arrangement (9), and serves to generate a resonance regulating signal ($U_R$).

9.  Device according to one of the preceding claims, **characterized in that** the output signal of the capacitance/voltage connector (2) is fed to a bandwidth-setting circuit (4) which is connected at the output end to the bias voltage-generating arrangement (9) and is provided for generating a bandwidth-setting control circuit ($U_B$).

10. Device according to Claim 9, **characterized in that** the bandwidth-setting circuit (4) has a position regulator with a component which is phase shifted through 90° and is arranged in the reverse branch of a control loop.

11. Device according to Claim 10, **characterized in that** the circular amplification of the position regulator is set in such a way that a predefined bandwidth or quality of the resonance of the detection movement is obtained.

12. Device according to Claim 11, **characterized in that** the electrode arrangement has two or four electrodes and the bias voltage-generating arrangement generates bias voltages for the electrodes according to the following relationships:

$$U_1 = U_B + U_{Q1} + U_T + U_R$$

$$U_2 = -U_B - U_{Q1} - U_T + U_R$$

$$U_3 = U_{Q2} + U_R$$

$$U_4 = U_{Q2} + U_R,$$

where the voltages $U_1$ and $U_2$ are used if there are two electrodes, and
where $U_T$ is a test signal generated by means of a test generator (6), $U_R$ is the output signal of the resonance regulator (5), $U_B$ is the output signal of the bandwidth setting circuit (4) and $U_{Q1}$ and $U_{Q2}$ are the output signals of the adaptive quadrature compensator (8).

**Revendications**

1. Dispositif pour générer un signal de vitesse de rotation comprenant :

   - un capteur de vitesse de rotation travaillant par oscillation rotative ou linéaire et dont la sortie fournit au moins un signal de mesure,
   - un circuit d'exploitation (2, 3, 7) relié au capteur de vitesse de rotation pour déterminer un signal de vitesse de rotation à partir du signal de mesure,
   - un générateur de tension de polarisation (9),
   - un dispositif à électrodes dans le capteur de vitesse de rotation, ayant au moins deux électrodes reliées au générateur de tension de polarisation (9),
   - un compensateur en quadrature (8) adaptatif dont le côté entrée est relié au circuit d'exploitation (2, 3, 7) et la sortie au générateur de tension de polarisation (9),
   - un compensateur de phases (3) adaptatif, faisant partie du circuit d'exploitation et un démodulateur de synchronisation (7) faisant partie du circuit d'exploitation,

   **caractérisé en ce que**
   le compensateur de phases (3), adaptatif présente des sorties pour un signal de mesure déphasé ($U_e$) et pour des signaux porteurs de démodulation ($U_{Tq}$, $U_{Tr}$).

2. Dispositif selon la revendication 1,
   **caractérisé en ce que**
   le signal de mesure est un signal de mesure capacitif et le circuit d'exploitation comporte un convertisseur capacité/tension (2).

3. Dispositif selon la revendication 1,
   **caractérisé en ce que**
   les signaux de porteuse de démodulation sont appliqués au compensateur en quadrature adaptatif (8).

4. Dispositif selon la revendication 3,
   **caractérisé en ce que**
   le démodulateur de synchronisation (7) comporte des bornes d'entrée pour les signaux de sortie du compensateur de phases adaptatif (3) et deux sorties, une première des sorties fournissant le signal de vitesse de rotation ($U_r$) et la seconde des sorties fournissant un signal en quadrature ($U_q$).

5. Dispositif selon la revendication 4,
   **caractérisé en ce que**
   le compensateur en quadrature, adaptatif (8) a une entrée pour le signal de vitesse de rotation ($U_r$) et une entrée pour le signal en quadrature ($U_q$).

6. Dispositif selon la revendication 5,
   **caractérisé en ce que**
   le compensateur en quadrature, adaptatif (8) génère à partir de ses signaux d'entrée, à l'aide d'un algorithme numérique adaptatif, au moins deux signaux de commande ($U_{Q1}$, $U_{Q2}$) pour le générateur de tension de polarisation (9).

7. Dispositif selon la revendication 6,
   **caractérisé en ce que**
   le compensateur en quadrature, adaptatif (8) comporte au moins deux sorties fournissant des signaux de commande différents ($U_{Q1}$, $U_{Q2}$) pour le générateur de tension de polarisation (9).

8. Dispositif selon l'une quelconque des revendications précédentes,
   **caractérisé par**
   un régulateur de résonance (5) dont la sortie est reliée au générateur de tension de polarisation (9) et servant à générer un signal de régulation de résonance ($U_R$)

9. Dispositif selon l'une quelconque des revendications précédentes,
   **caractérisé en ce que**
   le signal de sortie du convertisseur capacité/tension (2) est transmis à un circuit de réglage de largeur de bande (4) dont la sortie est reliée au générateur de tension de polarisation (9) et qui sert à générer un signal de commande de réglage de largeur de bande ($U_B$).

10. Dispositif selon la revendication 9,
    **caractérisé en ce que**

le circuit de réglage de largeur de bande (4) comporte un régulateur de position avec une composante déphasée à 90° associée à la branche de retour d'une boucle de régulation.

11. Dispositif selon la revendication 10,
**caractérisé en ce que**
l'amplification en boucle du régulateur de position est réglée pour atteindre une largeur de bande ou une qualité prédéfinie pour la résonance du mouvement de détection.

12. Dispositif selon la revendication 11,
**caractérisé en ce que**
le dispositif d'électrode comporte deux ou quatre électrodes et le dispositif générateur de tension de polarisation génère des tensions de précontrainte pour les électrodes en appliquant les relations suivantes :

$$U_1 = U_B + U_{Q1} + U_T + U_R$$

$$U_2 = - U_B - U_{Q1} - U_T + U_R$$

$$U_3 = U_{Q2} + U_R$$

$$U_4 = - U_{Q2} + U_R,$$

et dans ces relations :

dans le cas de deux électrodes on utilise les tensions $U_1$ et $U_2$, et
$U_T$ est un signal de test généré par un générateur de test (6),
$U_R$ est le signal de sortie du régulateur de résonance (5),
$U_B$ est le signal de sortie du circuit de réglage de largeur de bande (4), et
$U_{Q1}$ et $U_{Q2}$ sont les signaux de sortie du compensateur en quadrature adaptatif (8).

FIGUR 1

FIGUR 2

FIGUR 3

EP 1 123 484 B1

# FIGUR 4